# EUROPEAN PATENT SPECIFICATION

(11) **EP 2 290 854 B1**
(45) Date of publication and mention of the grant of the patent: **05.10.2016**
(21) Application number: 09305785.9
(22) Date of filing: 24.08.2009
(51) Int. Cl.: H04B 10/25, H04J 14/02, H04B 10/27

(54) **Optical communication network system and method of establishing a connection**
Optisches Kommunikationsnetzwerksystem und Verfahren zur Herstellung einer Verbindung
Système de réseau de communication optique et procédé pour l'établissement d'une connexion

(43) Date of publication of application: 02.03.2011
(73) Proprietor: ALCATEL LUCENT, 92100 Boulogne-Billancourt (FR)
(72) Inventor: Zami, Thierry, 91620, NOZAY (FR); Etienne, Sophie, 91620, NOZAY (FR)
(74) Representative: Berthier, Karine

(56) References cited:
- EP-A- 1 494 382
- WO-A-2009/035202
- US-A1- 2009 202 241

## Description

The technical domain of the invention is the domain of optical communication networks, and particularly access networks intended to connect a central device of e.g. an internet service provider to its end customers.

Optical transmission technology is now considered as a corner stone to develop and install the next generation access networks. This technologies set is called Fiber To The Home (FTTH). In practice the data stream between an end customer and its internet service provider is transmitted by means of a Passive Optical Network (PON) on the last mile. Today, to connect a central device, also called an Optical Line Terminal (OLT), of an operator facility to a plurality of end customer devices also called Optical Network Units .(ONU) of end customers, several PON implementations exist.

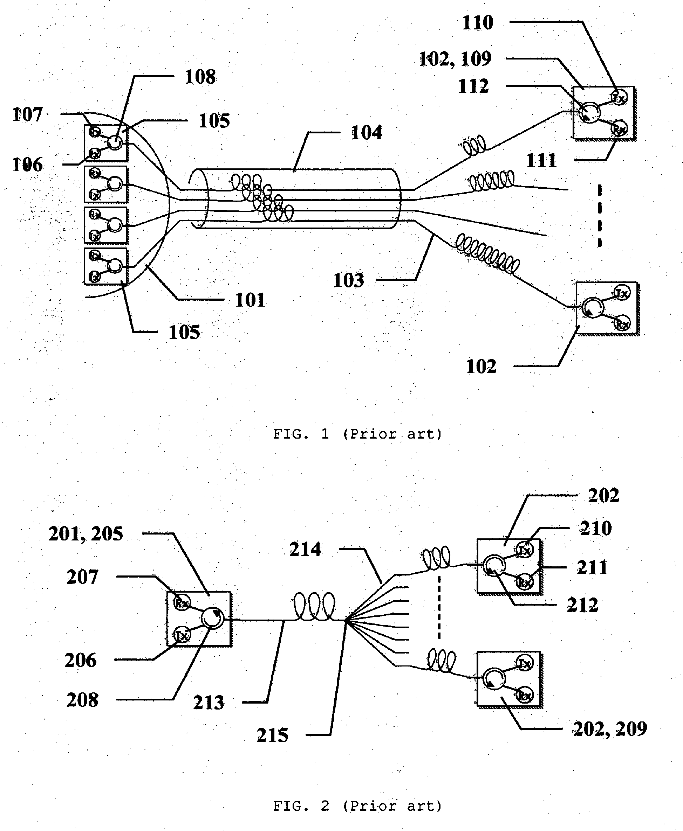

A point-to-point configuration, as illustrated by figure 1, is the most efficient one in terms of transmitted capacity and upgrading possibility. In such a configuration, a central device 101 is connected to a plurality of end customer devices 102. Each end customer device 102 is linked through a dedicated link 103. Said link 103 is connected on the central device side to a transponder 105 and on the end customer device side to a similar transponder 109. All said link 103 may be gathered into a main fiber duct 104. Such configuration necessitates the installation of a large quantity of optical fibers (one or two per end customer) from the central device 101 to the plurality of end customer devices 102. Consequently said configuration also necessitates, on the central device side one transponder 105 per link 103.

On the other hand, a tree configuration, as illustrated at figure 2, with a time multiplexing of the data packets to or from all the end customers connected to a same tree is another interesting configuration. The central device 201 comprises a single transponder 205. The fiber network has the form of a tree. A trunk 213 of said tree is connected to said central device 201. A plurality of leaves 214 are connected each to one among the same plurality of end customer transponders 202. A 1:N combiner 215 connects said trunk 213 to said leaves 214. Consequently, said configuration considerably reduces the number of optical fibers to install at the expense of a smaller transmitted capacity above all when all the end customers 202 are connected at the same time.

For both configurations, transponders 105, 109, 205, 209 each comprise a transmitter 106, 110, 206, 210, a receiver 107, 111, 207, 211 coupled to the optic fiber through an optical coupler 108, 112, 208, 212. Said optical coupler can be an optical circulator, a wavelength multiplexer, or any equivalent device.

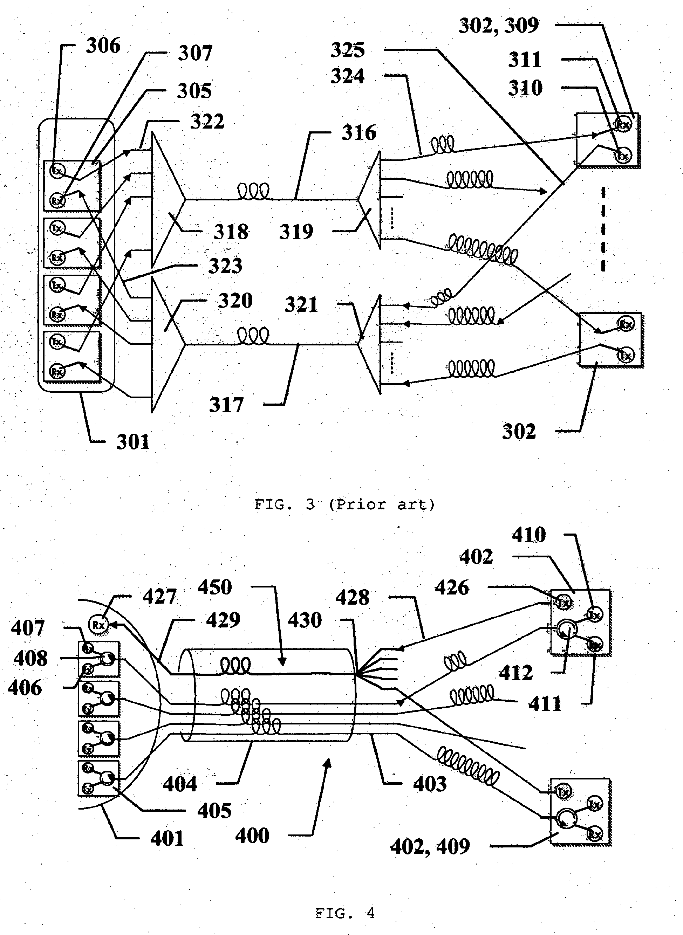

The well known Wavelength Division Multiplexing (WDM) technologies, as illustrated at figure. 3, can make a bridge between these two configurations. Several tens of optical channels with different wavelengths could be multiplexed into a single fiber 316, 317. Downward traffic, travels over individual lines. 322, from transmitters 306 of transponders 305 of central device 301, is multiplexed by a first wavelength multiplexer 318 and travels over a single downward fiber 316; until a first wavelength demultiplexer 319, which transmits over individual lines 324 to receivers 311 of transponder 309 of end customer devices 302. Reversely, upward traffic, first travels over individual lines 325, from transmitters 310 of transponders 309 of end customer devices 302, is multiplexed by a second wavelength multiplexer 321 and travels over a single upward fiber 317; until a first wavelength demultiplexer 320, which transmits over individual lines 323 to receivers 307 of transponder 305 of central device 301. Said wavelength demultiplexers 319, 320 can separate these channels so that each of them is sent toward an end customer device 302 it corresponds to. Such arrangement combines the advantages of said both configurations previously mentioned: the number of fibers is reduced thanks to the wavelength multiplexing and each end customer device 302 has it own connection without bandwidth sharing. Such a solution is called a point-to-point WDM. It can be seen that for such a point-to-point WDM, the physical topology corresponds to a point-to-multipoint configuration while the logical connectivity corresponds to a point-to-point configuration.

Some optical communication network systems combining organizations are also known: Document WO 2009/035202 discloses an optical communication network system with a first WDM-PON and a second WDM-PON partially sharing network resources, such as an optical fiber, with the first WDM-PON. Said first DWM-PON and second WDM-PON are used for connecting a plurality of end customer devices to a central device depending on the desired capacity and speed.

A point-to-point organization, be it a "simple" point-to-point one or a "WDM" multiplexed one, is preferred to deploy an access network. However said point-to-point configuration raises new issues with respect to energy consumption, as compared to point-to-multipoint configuration. When an end customer switches on its end customer device/ONU 102, 302, this latter has to send a signal to the central device/OLT 101, 301, in order to initiate a connection. Contrary to the point-to-multipoint configuration where all the upstream packets are received by a single receiver 207 at the OLT, in case of point-to-point configuration each upstream (that is from an end customer device 102, 302, toward a central device 101, 301) connection is detected by a distinct transponder/receiver 105/107, 305/307. Hence, to detect a connection demand of a connecting end customer device 102, 202, 302, all said transponders/receivers 105, 205, 305 should remain permanently turned on even if and when the corresponding end customer device 102, 202, 302, is not active. The problem is that this situation consumes a lot of energy.

This situation can even be worst in case of a WDM-PON using remote coloring of laser sources of end customer devices 302. In that case the wavelength of a transmitter of an end customer device 302 which send the upstream data to the central device 301 should correspond to the wavelength multiplexer port it is connected to.

To avoid as far as possible any wavelength mismatch, remote coloring consists in using an end customer device 302 with wavelength-tunable laser source, the wavelength of which being copied from a remote signal sent by the central device, 301. In a preferred embodiment, said remote signal i-s the downstream (that is from a central device 301, toward an end customer device 302) signal itself. In that case, the end customer device 302 can not send any signal to the central device 301 without said remote signal. Consequently, said remote signal should also be permanently active so that whenever the end customer device 302 is switched on, it can send its connection demand to the central device 301. This further obligation also significantly raises power consumption as all remote signals corresponding to end customer devices should remain active.

The present invention addresses and solves said energy consumption problem, by adding to a point-to-point network, be it a simple point-to-point network or a WDM point-to-point network, a multipoint-to-point network intended to detect connection demands for new connection from end customers devices, in order to avoid the need for permanent operation of most of the transponders of the central device.

The invention concerns an optical communication network system for connecting one central device with a plurality of end customer devices, comprising a point-to-point network connecting said end customer devices to said central device, and a multipoint-to-point network connecting said end customer devices to said central device.

According to another feature of the invention, said point-to-point network is bi-directional, and said multipoint-to-point network is at least mono-directional from the end customer devices up toward the central device.

According to another feature of the invention, the point-to-point network comprises a same plurality of point-to-point links, each link bi-directionally connecting said central device to one of said end customer devices.

According to another feature of the invention, at least some of said point-to-point links are wavelength division multiplexed.

According to another feature of the invention, said multipoint-to-point network comprises one tree link comprising a trunk connected to said central device, a same plurality of leaves each connected to one of said end customer devices, and an optical combiner between said trunk and said leaves.

The invention also concerns, in an optical communication network system according to any one of the previous embodiments, a method of establishing a connection between a connecting end customer device and a central device, comprising the steps of:
- sending a connection demand from said connecting end customer device to said central device over the multipoint-to-point network;
- sending an acknowledgement in response to said connection demand from said central device over the point-to-point network;
- sending a first message in response to said acknowledgement from said connecting end customer device to said central device over the point-to-point net.

According to another feature of the invention, said method further comprises the steps of:
- turning on all central device transponders connected via the point-to-point network to previously inactive end customer devices before the sending an acknowledgement step;
- turning off all said central device transponders but the one connected to the connecting end customer device after reception of said first message by said central device;
said acknowledgment being sent through all said central device transponders just turned on to all end customer devices connected thereof.

According to another feature of the invention, the point-to-point network uses wavelength division multiplexing and remote coloring, with. a different wavelength/colour for each end customer device, said method further comprising the steps of:
- turning on all laser sources to generate remote color sources along with the turning on all central device transponders step; and
- turning off all said laser sources but the one associated to the connecting end customer device after reception of said first message by said central device.

According to another feature of the invention, the connection demand includes an indication of the wavelength/colour used by said connecting end customer device during its last connection, further comprising, before the turning on all central device transponders step, the steps of:
- turning on only the central device transponder associated to said indicated wavelength/colour and the corresponding laser source;
- sending an acknowledgement through only said central device transponder just turned on to one end customer device connected thereof;
- if a first message is received in response to said acknowledgement over the point-to-point link associated to said wavelength/colour before a given timeout, the connection is established and the method ends.

According to another feature of the invention, the connection demand comprises an identifier specific of the connecting end customer device.

According to another feature of the invention, said acknowledgement is sent back from said central device along with said identifier.

According to another feature of the invention, possible collisions between connection demands sent by end customer devices over said multipoint-to-point network are managed using a CSMA/CD type protocol.

Others features, details and advantages of the invention will become more apparent from the detailed illustrating description given hereafter with respect to the drawings on which:
- figure 1 is a schematic diagram of a simple point-to-point optical network organisation, already described,
- figure 2 is a schematic diagram of a point-to-multipoint optical network organisation, already described,
- figure 3 is a schematic diagram of a WDM point-to-point optical network organisation, already described,
- figure 4 is a schematic diagram of a simple point-to-point optical network upgraded according to the invention,
- figure 5 is a schematic diagram of a WDM point-to-point optical network upgraded according to the invention.

The main idea of the invention is the addition to a point-to-point network 400, 500, of a multipoint-to-point 450, 550 intended to detect connection demands for new connection from end customer devices 402, 502.

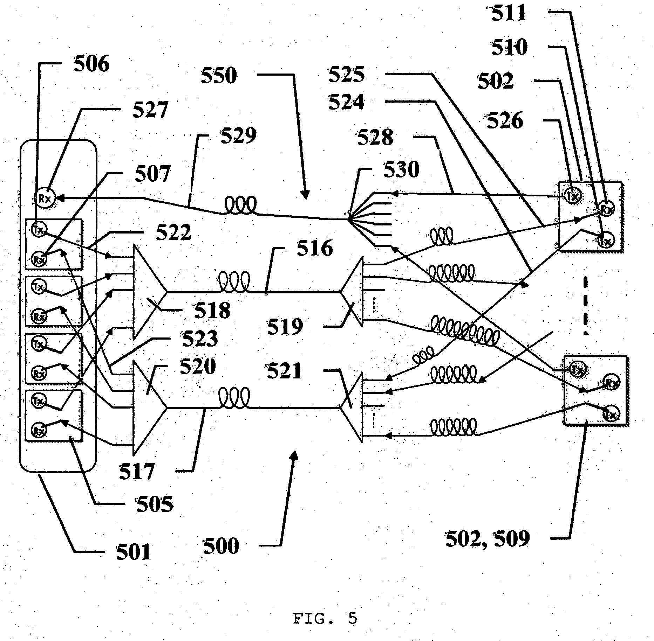

Such an addition may be applied to either a simple point-to-point network 400 of which an exemplary embodiment is provided at figure 4, or a WDM point-to-point network 500 of which an exemplary embodiment is provided at figure 5.

On both figures 4 and 5, the elements are respectively identical to the ones of respective figures 1 and 3. On both figures 4 and 5, one central device 401, 501 is connected with a plurality of end customer devices 402, 502.

As in prior art, a point-to-point network 400, 500 connects said end customer devices 402, 502 to said central device 401, 501. The invention is characterized in that it further comprises a multipoint-to-point network 450, 550 connecting said end customer devices 402, 502 to said central device 401, 501.

, In a preferred embodiment, said point-to-point network 400, 500 is bi-directional, and said multipoint-to-point network 450, 550 is at least mono-directional from the end customer devices 402, 502 up toward the central device 401, 501. The point-to-point network 400, 500 is preferentially used to bi-directionally exchange data between central device 401, 501 and end customer devices 402, 502. The multipoint-to-point network 450, 550 is preferably used to transmit connection demand(s) from a connecting (willing to connect) end customer device 402, 502 to the central device 401, 501.

On figure 4, each end customer device 402 is connected through a dedicated link 403. Said link 403 is connected at the central device side to a transponder 405 and at the end customer device side to a similar transponder 409. All said link 403 may be gathered into a main fiber duct 404. said fiber duct 404 may also enclose the tree of the added multipoint-to-point network 450, 550. Transponders 405, 409, each comprise a transmitter 406, 410, a receiver 407, 411, both coupled to the optic fiber through an optical coupler 408, 412. Said optical coupler can be an optical circulator, a wavelength multiplexer, or any equivalent device. The illustrated configuration is one of a "simple" point-to-point network 400, comprising central device side transponders 405, links 403 and end customer side transponders 409.

On figure 5, several optical channels with different wavelengths are multiplexed into a single fiber 516, 517. Downward traffic, travels over individual lines 522, from transmitters 506 of transponders 505 of central -device 501, is multiplexed by a first wavelength multiplexer 518, and travels over a single downward fiber 516, until a first wavelength demultiplexer 519, which transmits over individual lines 524 to receivers 511 of transponder 509 of end customer devices 502. Reversely, upward traffic, first travels over individual lines 525, from transmitters 510 of transponders 509 of end customer devices 501, is multiplexed by a second wavelength multiplexer 521 and travels over a single upward fiber 517, until a first wavelength demultiplexer 520, which transmits over individual lines 523 to receivers 507 of transponder 505 of central device 501. Said wavelength demultiplexers 519, 520 can separate these channels so that each of them is sent toward an end customer 502 it corresponds to. The illustrated configuration is one of a "WDM" point-to-point network 500, comprising central device side transponders 505, downward fiber 516, upward fiber 517, wavelength multiplexers 518, 521, wavelength demultiplexers 519, 520 and end customer side transponders 409.

On both embodiments of either simple (figure 4) or WDM (figure 5) point-to-point network 400, 500, the added multipoint-to-point networks 450, 550 are identical.

Said multipoint-to-point network 450, 550 comprises one tree link. Said tree is composed on one side of a trunk 429, 529 connected to said central device 401, 501. On the other side said tree is composed of a plurality of leaves 428, 528, each leaf-being connected to one of said end customer devices 402, 502. Between the trunk 429, 529 and said leaves 428, 528 is disposed an optical combiner 430, 530. Said optical combiner 430, 530 is in charge of transmitting any message arriving from one of the leaves 428, 528 toward the trunk 429, 529.

Each leaf 428, 528 is connected on the end customer side to a transmitter 426, 526 advantageously pertaining to the end customer device transponder 409, 509. According to an embodiment, said transmitter 426, 526 may be the same as the transmitter 410, 510 used in conjunction with the point-to-point network 400, 500.

The trunk 429, 529 is connected on the central device side to a receiver 427, 527. Said receiver 427, 527 preferentially pertains to the central device 501, and is advantageously unique. Despites said receiver 427, 527 may be doubled, separated in several receivers each associated with a partial multipoint-to-point network 450, 550 or redounded, it is to be noted that due to the presence of a multipoint-to-point network 450, 550, only one such receiver 427, 527 is needed to receive connexion demands. So, only one receiver 427, 527 at the central device 401, 501 should remain active even if up to eighty different end customer devices 402, 502 are linked to this central device 401, 501.

As the optical combiner 430, 530 combines the signal from the different end customer devices 402, 502, there is no issue in terms of wavelength. Hence the additional transmitter 426, 526 can send its information on any wavelength provided that it corresponds to the transmission optical frequency window of the fiber and of the central device receiver 427, 527.

Because of its possible large number of ports (one for each connected leaves 428, 528), the optical combiner 430, 530 could exhibit an important insertion loss (for instance up to 20 dB for 40 ports). But it is not a problem because the message of the connection demand can be modulated at a relative low data bit rate (for instance only few Kb/s). With such a low modulation rate, the power budget between the end customer device 402, 502 and the central device 401, 501 is very large (more than 50 dB) so that the message could be correctly detected by the central device receiver 427, 527 despite the great insertion loss of the optical combiner 430, 530.

In a communication network system according to the invention, a method of establishing a connection between a connecting end customer device and a central device 401, 501 may comprise the following steps.

In a first step the connecting end customer device willing to connect to the central device 401, 501, sends a connection demand, over the multipoint-to-point network 450, 550, toward the central device 401, 501.

In a second step, said connection demand is received by the central device 401, 501, through the receiver 427, 527. Said reception only needs said single receiver 427, 527 to be active. Consequently central device transponders 405, 505, corresponding to said connecting end customer device and to other inactive end customer devices 402 are thus preferentially turned off.

The reception of the connection demand indicates that at least one end customer device 402, 502 is willing to connect. The central device 401, 501 can then turns on at least the transponder 405, 505 corresponding to said connecting end customer device.

Once done, the central device 401, 501, informs the connecting end customer device 402, 502 that its transponder 405, 505 is turned on, by sending back an acknowledgement of said connection demand, preferentially over the point-to-point network 400, 500, through the transmitter 406, 506 of said transponder 405, 505.

In a third step, after receiving said acknowledgement, said connecting end customer device starts communicating, and thus sends a first message of its normal intended communication, over the point-to-point network 400, 500, thus establishing the connection both ways.

Since the reception of a connection demand by central device 401, 501 through receiver 427, 527 may not be indicative of which one of the previously inactive end customer device 402, 502 is willing to connect, the method may further comprise the two following steps. In a first step all the central device transponders 405, 505 connected via the point-to-point network 400, 500 to previously inactive end customer- devices 402, 502, and consequently previously inactive, that is all the previously inactive transponders, are turned on. This allows the central device 401, 501 to send back the acknowledgment to all of said previously inactive end customer device 402, 502. So doing, the central device is sure to send said acknowledgement to the end customer device 402, 502 trying to establish a connection.

Said connecting end customer device 402, 502, upon reception of said acknowledgement, knows that its corresponding transponder 405, 505 on the central device side has been turned on, and proceeds by sending its first message of normal communication, over the point-to-point network 400, 500, knowing that it can be received by the central device 401, 501.

The reception by the central device 401, 501, of said first message on (only) one of the receivers 407, 507, identifies the connecting end customer device 402, 502.

Accordingly, central device transponders 405, 505, that were turned on just before, that is transponders 405, 505, corresponding to previously inactive end customer devices 402, 502, can be all turned off, except the one identified as being connected to the connecting end customer device, that is the one that has received the first message.

When the point-to-point network 400, 500 is of the WDM type, it may use remote coloring. Remote coloring is a technique where the central device 401, 501 downwardly send a given distinct remote "color" or wavelength to each of the end customer devices 402, 502, by mean of a laser source. Said remote "color" is then copied by the end customer device transmitter 410, 510 to upwardly send its messages back to central device 401, 501. Indeed the wavelength of said transmitter 410, 510 should correspond to the wavelength multiplexer port it is connected to. The end customer device 402, 502 can not send any signal to the central device 401, 501 without the remote signal. Therefore this remote signal should also be active/activated before the end customer device 402, 502 can send its first message upward along the point-to-point network 500.

In that case, the method further comprises the following steps. All laser sources that are used to generate remote color sources are turned on along with the turning on of all central device transponders 505, for the previously inactive end customer devices 502. So doing, the connecting end customer device is able to transmit its first message, upon reception of the acknowledgement. The transponder 505 corresponding to the connecting end customer device 502 is identified by the reception of said first message, as described before. Then all said laser sources can be turned off except the one associated to the connecting end customer device 502 so identified.

When using remote coloring, it can be useful to include in the connection demand an indication of the wavelength/color used by said connecting end customer device 402, 502 during its last connection. Said indication can be used by central device 501 to identify the corresponding transponder 505 associated with said wavelength. Then, before turning on all central device transponders 405, 505, the following.sequence may be attempted: only the central device transponder 505 associated to said indicated wavelength/colour and its corresponding laser source are turned on, the acknowledgement is sent only through said central device transponder 505 to the end customer device 502 connected thereof, expecting the connecting end customer device to be connected with. Most often, if said end customer device has not been moved, it is still at the end of said line. So the duration of the connection establishment can be shortened.

Such connection establishment is normally confirmed by the reception of a first message in response to said acknowledgement, and the method may end. Either, if no such first message is received during a given timeout, the connection is not considered to be established and the method goes on with the two steps of: turning on all previously inactive transponders 505 in order to find the connecting end customer device 502, and then turning off all said transponders but the corresponding one.

It can also be advantageous to include in a connection demand an identifier specific of the connecting end customer device. For instance, it could be a code based on the unique MAC address of the end customer device.

When such an identifier is contained in the connection demand, the acknowledgement sent back to end customer devices 402, 502 is advantageously accompanied by said identifier. The receiving end customer device 402, 502, can thus verify that the acknowledgment concerns its own connection demand.

Since all the end consumer devices 402, 502 share the same medium on the multipoint-to-point network 450, 550, collisions may occur between different demands sent simultaneously from different end consumer device 402, 502. In order to keep the solution as simple as possible to manage, a simple protocol such as the CSMA/CD of Ethernet can be used to manage said collisions.

## Claims

1. An optical communication network system for connecting one central device (401, 501) with a first plurality of end customer devices (402, 502), comprising a point-to-point network (400, 500) connecting said end customer devices (402, 502) to said central device (401, 501), and a multipoint-to-point network (450, 550) connecting said end customer devices (402, 502) to said central device (401, 501), **characterized in that** said multi-point-to-point network (450, 550) is adapted to detect connection demands from said end customer devices for new connections to be established over said point-to-point network.

2. The optical communication network system of claim 1, wherein said point-to-point network (400, 500) is bi-directional, and said multipoint-to-point network (450, 550) is at least mono-directional from the end customer devices (402, 502) up toward the central device (401, 501).

3. The optical communication network system of claim 2, wherein the point-to-point network (400, 500) comprises a second plurality of point-to-point links (403) with the same cardinal as said first plurality, each link (403) bi-directionally connecting said central device (401, 501) to one of said end customer devices (402, 502).

4. The optical communication network system of claim 3, wherein at least some of said point-to-point links (403) are wavelength division multiplexed.

5. The optical communication network system of claim 4, wherein said multipoint-to-point network (450, 550) comprises one tree link comprising a trunk (429, 529) connected to said central device (401, 501), a third plurality of leaves (428, 528) with the same cardinal as said first plurality each connected to one of said end customer devices (402, 502), and an optical combiner (430, 530) between said trunk (429, 529) and said leaves (428, 528).

6. A method in an optical communication network system according to any one of claims 1 to 5 of establishing a connection between a connecting end customer device (402, 502) and a central device (401, 501), comprising the steps of:
- sending a connection demand from said connecting end customer device (402, 502) to said central device (401, 501) over the multipoint-to-point network (450, 550);
- sending an acknowledgement in response to said connection demand from said central device (401, 501) over the point-to-point network (400, 500);
- sending a first message in response to said acknowledgement from said connecting end customer device (402, 502) to said central device (401, 501) over the point-to-point network (400, 500).

7. The method of claim 6, further comprising the steps of:
- turning on all central device transponders (405, 505) connected via the point-to-point network (400, 500) to previously inactive end customer devices (402, 502) before the sending an acknowledgment step;
- turning off all said central device transponders (405, 505) but the one connected to the connecting end customer device after reception of said first message by said central device (401, 501);
said acknowledgement being sent through all said central device transponders (405, 505) just turned on to all end customer devices (402, 502) connected thereof.

8. The method of claim 6 or 7, wherein the point-to-point network (400, 500) uses wavelength division multiplexing and remote coloring, with a different wavelength/colour for each end customer device (402, 502), further comprising the steps of:
- turning on all laser sources to generate remote color sources along with the turning on all central device transponders step; and
- turning off all said laser sources but the one associated to the connecting end customer device after reception of said first message by said central device (401, 501).

9. The method of claim 8, wherein the connection demand includes an indication of the wavelength/colour used by said connecting end customer device (402, 502) during its last connection, further comprising, before the turning on all central device transponders step, the steps of:
- turning on only the central device transponder (405, 505) associated to said indicated wavelength/colour and the corresponding laser source;
- sending an acknowledgement through only said central device transponder (405, 505) just turned on to one end customer device (402, 502) connected thereof;
- if a first message is received in response to said acknowledgement over the point-to-point link associated to said wavelength/colour before a given timeout, the connection is established and the method ends.

10. The method of any one of claims 6 to 9, wherein the connection demand comprises an identifier specific of the connecting end customer device.

11. The method of claim 10, wherein said acknowledgement is sent back from said central device (401, 501) along with said identifier.

12. The method of any one of claims 6 to 11, wherein possible collisions between connection demands sent by end customer devices (402, 502) over said multipoint-to-point network (450, 550) are managed using a CSMA/CD type protocol.

## Patentansprüche

1. Optisches Kommunikationsnetzwerksystem für das Verbinden einer zentralen Vorrichtung (401, 501) mit einer ersten Vielzahl von Endkundengeräten (402, 502), ein Punkt-zu-Punkt-Netzwerk (400, 500) umfassend, welches besagte Benutzerendgeräte (402, 502) mit besagter zentraler Vorrichtung (401, 501) verbindet, sowie ein Mehrpunkt-zu-Punkt-Netzwerk (450, 550), welches besagte Benutzerendgeräte (402, 502) mit besagter zentraler Vorrichtung (401, 501) verbindet, **dadurch gekennzeichnet, dass** besagtes Mehrpunkt-zu-Punkt-Netzwerk (450, 550) dafür ausgelegt ist, um Verbindungsanforderungen von besagten Endkundengeräten nach neu über besagtes Punkt-zu-Punkt-Netzwerk herzustellenden Verbindungen festzustellen.

2. Das optische Kommunikationsnetzwerksystem nach Anspruch 1, wobei besagtes Punkt-zu-Punkt-Netzwerk (400, 500) bidirektional und besagtes Mehrpunkt-zu-Punkt-Netzwerk (450, 550) mindestens monodirektional von den Endkundengeräten (402, 502) hinauf zur zentralen Vorrichtung (401, 501) ist.

3. Das optische Kommunikationsnetzwerksystem nach Anspruch 2, wobei das Punkt-zu-Punkt-Netzwerk (400, 500) eine zweite Vielzahl von Punkt-zu-Punkt-Verbindungen (403) mit derselben kardinalen Anzahl wie besagte erste Vielzahl umfasst, wobei jede Verbindung (403) besagte zentrale Vorrichtung (401, 501) bidirektional mit einem der besagten Endkundengeräten (402, 502) verbindet.

4. Das optische Kommunikationsnetzwerksystem nach Anspruch 3, wobei mindestens einige der besagten Punkt-zu-Punkt-Verbindungen (403) wellenlängenmultiplext sind.

5. Das optische Kommunikationsnetzwerksystem nach Anspruch 4, wobei besagtes Mehrpunkt-zu-Punkt-Netzwerk (450, 550) einen Baum-Link mit einer Stammleitung (429, 529) umfasst, die mit besagter zentraler Vorrichtung (401, 501) verbunden ist, eine dritte Vielzahl von Blättern (428, 528) mit derselben kardinalen Anzahl wie besagte erste Vielzahl, jeweils verbunden mit einem besagter Endkundengeräte (402, 502), und einen optischen Signalverknüpfer (430, 530) zwischen besagtem Stamm (429, 529) und besagen Blättern (428, 528).

6. Verfahren in einem optische Kommunikationsnetzwerksystem nach einem jeglichen der Ansprüche 1 bis 5, wobei das Verfahren der Herstellung einer Verbindung zwischen einem eine Verbindung herstellenden Endkundengerät (402, 502) und einer zentralen Vorrichtung (401, 501) dient und die folgenden Schritte umfasst:
- das Senden einer Verbindungsanforderung von dem besagten, eine Verbindung herstellenden Endkundengerät (402, 502) über das Mehrpunkt-zu-Punkt-Netzwerk (450, 550) an besagte zentrale Vorrichtung (401, 501);
- das Senden einer Bestätigung in Reaktion auf besagte Verbindungsanforderung durch besagte zentrale Vorrichtung (401, 501) über das Punkt-zu-Punkt-Netzwerk (400, 500);
- das Senden einer ersten Mitteilung in Reaktion auf besagte Bestätigung durch das besagte, eine Verbindung herstellende Endkundengerät (402, 502) über das Mehrpunkt-zu-Punkt-Netzwerk (400, 500) an besagte zentrale Vorrichtung (401, 501).

7. Verfahren nach Anspruch 6, weiterhin die folgenden Schritte umfassend:
- das Einschalten aller Transponder der zentralen Vorrichtung (405, 505), die über das Punkt-zu-Punkt-Netzwerk (400, 500) mit zuvor inaktiven Endkundengeräten (402, 502) verbunden sind, ehe der Schritt des Sendens einer Bestätigung erfolgt;
- das Ausschalten aller besagten Transponder der zentralen Vorrichtung (405, 505) außer desjenigen, der mit dem eine Verbindung herstellenden Endkundengerät verbunden ist, nachdem besagte erste Mitteilung durch besagte zentrale Vorrichtung (401, 501) empfangen wurde;
wobei besagte Bestätigung durch alle besagten, gerade angeschalteten Transponder der zentralen Vorrichtung (405, 505) an alle verbundenen Endkundengeräte (402, 502) gesendet werden.

8. Das Verfahren nach Anspruch 6 oder 7, wobei das Punkt-zu-Punkt-Netzwerk (400, 500) Wellenlängenmultiplexing und remotegesteuerte Wellenlängen verwendet, jedem Endkundengerät (402, 502) eine unterschiedliche Wellenlänge/Farbe zuweisend, weiterhin die folgenden Schritte umfassend:
- das Einschalten aller Laserquellen zwecks Generierens entfernter Frequenzquellen zusammen mit dem Schritt des Einschaltens aller Transponder der zentralen Vorrichtung; und
- das Ausschalten aller besagten Laserquellen außer derjenigen, die mit dem eine Verbindung herstellenden Endkundengerät verbunden ist, nachdem besagte erste Mitteilung durch besagte zentrale Vorrichtung (401, 501) empfangen wurde.

9. Das Verfahren nach Anspruch 8, wobei die Verbindungsanforderung eine Angabe der Wellenlänge/Farbe umfasst, die von besagtem, eine Verbindung aufbauendem Endkundengerät (402, 502) während seiner letzten Verbindung verwendet wurde, weiterhin vor dem Schritt des Einschaltens aller Transponder der zentralen Vorrichtung die folgenden Schritte umfassend:
- das Einschalten ausschließlich derjenigen Transponder der zentralen Vorrichtung (405, 505), die mit der angegebenen Wellenlänge/Farbe assoziiert sind, sowie der entsprechenden Laserquelle;
- das Senden einer Bestätigung ausschließlich durch besagten, gerade angeschalteten Transponder der zentralen Vorrichtung (405, 505) an ein damit verbundenes Endkundengerät (402, 502);
- wird vor Ablauf einer vorgegebenen Frist eine erste Mitteilung in Realtion auf besagte Bestätigung über die mit besagter Wellenlänge/Farbe assoziierte Punkt-zu-Punkt-Verbindung empfangen, wird die Verbindung hergestellt und das Verfahren ist beendet.

10. Das Verfahren nach einem jeglichen der Ansprüche 6 bis 9, wobei die Verbindungsanforderung eine für das die Verbindung herstellende Endkundengerät spezifische Kennung umfasst.

11. Das Verfahren nach Anspruch 10, wobei besagte Bestätigung von besagter zentraler Vorrichtung (401, 501) zusammen mit besagter Kennung zurückgesendet wird.

12. Das Verfahren nach einem jeglichen der Ansprüche 6 bis 11, wobei mögliche Kollisionen zwischen Verbindungsanforderungen, die von verschiedenen Endkundengeräten (402, 502) über besagtes Mehrpunkt-zu-Punkt-Netzwerk (450, 550) gesendet werden, anhand eines Protokolls des Typs CSMA/CD verwaltet werden.

## Revendications

1. Système de réseau de communication optique destiné à connecter un dispositif central (401, 501) à une première pluralité de dispositifs d'utilisateur final (402, 502), comprenant un réseau point à point (400, 500) connectant lesdits dispositifs d'utilisateur final (402, 502) audit dispositif central (401, 501), et un réseau multipoint à point (450, 550) connectant lesdits dispositifs d'utilisateur final (402, 502) audit dispositif central (401, 501), **caractérisé en ce que** ledit réseau multipoint à point (450, 550) est adapté pour détecter les demandes de connexion provenant desdits dispositifs d'utilisateur final pour établir de nouvelles connexions sur ledit réseau point à point.

2. Système de réseau de communication optique selon la revendication 1, dans lequel ledit réseau point à point (400, 500) est bidirectionnel, et ledit réseau multipoint à point (450, 550) est au moins unidirectionnel dans le sens des dispositifs d'utilisateur final (402, 502) vers le dispositif central (401, 501).

3. Système de réseau de communication optique selon la revendication 2, dans lequel le réseau point à point (400, 500) comprend une deuxième pluralité de liaisons point à point (403) dont le nombre est identique à celui de ladite première pluralité, chaque liaison (403) connectant de façon bidirectionnelle ledit dispositif central (401, 501) à l'un desdits dispositifs d'utilisateur final (402, 502).

4. Système de réseau de communication optique selon la revendication 3, dans lequel au moins certaines desdites liaisons point à point (403) sont des liaisons à multiplexage par répartition en longueur d'onde.

5. Système de réseau de communication optique selon la revendication 4, dans lequel ledit réseau multipoint à point (450, 550) contient une liaison arborescente comprenant une jonction (429, 529) connectée audit dispositif central (401, 501), une troisième pluralité de noeuds terminaux (428, 528) dont le nombre est identique à celui de ladite première pluralité, chacun étant connecté à l'un desdits dispositifs d'utilisateur final (402, 502), et un combinateur optique (430, 530) situé entre ladite jonction (429, 529) et lesdits noeuds terminaux (428, 528).

6. Procédé d'un système de réseau de communication optique selon l'une quelconque des revendications 1 à 5 destiné à établir une connexion entre un dispositif d'utilisateur final en cours de connexion (402, 502) et un dispositif central (401, 501), comprenant les étapes suivantes :
- envoyer une demande de connexion dudit dispositif d'utilisateur final en cours de connexion (402, 502) audit dispositif central (401, 501) sur le réseau multipoint à point (450, 550) ;
- envoyer un accusé de réception en réponse a ladite demande de connexion depuis ledit dispositif central (401, 501) sur le réseau point à point (400, 500) ;
- envoyer un premier message en réponse audit accusé de réception dudit dispositif d'utilisateur final en cours de connexion (402, 502) audit dispositif central (401, 501) sur le réseau point à point (400, 500).

7. Procédé selon la revendication 6, comprenant en outre les étapes suivantes :
- allumer tous les répéteurs (405, 505) du dispositif central connectés via le réseau point à point (400, 500) aux dispositifs d'utilisateur final (402, 502) précédemment inactifs avant l'étape d'envoi d'accusé de réception ;
- éteindre tous lesdits répéteurs (405, 505) du dispositif central sauf celui connecté au dispositif d'utilisateur final en cours de connexion après réception dudit premier message par ledit dispositif central (401, 501) ;
ledit accusé de réception étant envoyé à travers tous lesdits répéteurs (405, 505) du dispositif central venant d'être allumés vers tous les dispositifs d'utilisateur final (402, 502) qui y sont connectés.

8. Procédé selon les revendications 6 ou 7, dans lequel le réseau point à point (400, 500) utilise le multiplexage par répartition en longueur d'onde et la coloration à distance, avec une longueur d'onde/couleur différente pour chaque dispositif d'utilisateur final (402, 502), comprenant en outre les étapes suivantes :
- allumer toutes les sources laser afin de générer des sources de couleur à distance parallèlement à l'étape d'allumage de tous les répéteurs du dispositif central ; et
- éteindre toutes lesdites sources laser sauf celle associée au dispositif d'utilisateur final en cours de connexion après réception dudit premier message par ledit dispositif central (401, 501).

9. Procédé selon la revendication 8, dans lequel la demande de connexion inclut une indication de la longueur d'onde/couleur utilisée par ledit dispositif d'utilisateur final en cours de connexion (402, 502) lors de sa dernière connexion, comprenant en outre, avant l'étape d'allumage de tous les répéteurs du dispositif central, les étapes suivantes :
- allumer uniquement le répéteur (405, 505) du dispositif central associé à ladite longueur d'onde/couleur indiquée et la source laser correspondante ;
- envoyer un accusé de réception uniquement via ledit répéteur (405, 505) du dispositif central venant d'être allumé à un dispositif d'utilisateur final (402, 502) qui y est connecté ;
- si un premier message est reçu en réponse audit accusé de réception sur la liaison point à point associée à ladite longueur d'onde/couleur avant l'expiration d'une temporisation spécifiée, la connexion est établie et le procédé prend fin.

10. Procédé selon l'une quelconque des revendications 6 à 9, dans lequel la demande de connexion comprend un identifiant spécifique au dispositif d'utilisateur final en cours de connexion.

11. Procédé selon la revendication 10, dans lequel ledit accusé de réception est renvoyé dudit dispositif central (401, 501) avec ledit identifiant.

12. Procédé selon l'une quelconque des revendications 6 à 11, dans lequel de possibles collisions entre les demandes de connexion envoyées par les dispositifs d'utilisateur final (402, 502) sur ledit réseau multipoint à point (450, 550) sont gérées à l'aide d'un protocole de type CSMA/CD.
